(19) Europäisches Patentamt / European Patent Office / Office européen des brevets

(11) **EP 2 869 272 A1**

(12) **EUROPEAN PATENT APPLICATION**
published in accordance with Art. 153(4) EPC

(43) Date of publication:
**06.05.2015 Bulletin 2015/19**

(51) Int Cl.:
***G06T 13/00*** (2011.01)    ***G06F 3/048*** (2013.01)

(21) Application number: **13834614.3**

(22) Date of filing: **12.07.2013**

(86) International application number:
**PCT/CN2013/079301**

(87) International publication number:
**WO 2014/036857 (13.03.2014 Gazette 2014/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.09.2012   CN 201210324327**
**15.11.2012   CN 201210461080**

(71) Applicant: **Xiaomi Inc.**
**Beijing 100085 (CN)**

(72) Inventors:
• **LI, Jiangtao**
**Beijing 100049 (CN)**
• **WANG, Min**
**Beijing 100049 (CN)**
• **SUN, Peng**
**Beijing 100085 (CN)**

(74) Representative: **Hanna, Peter William Derek et al**
**Hanna Moore & Curley**
**13 Lower Lad Lane**
**Dublin 2 (IE)**

(54) **ANIMATION PLAYING METHOD, DEVICE AND APPARATUS**

(57)    The present invention relates to an image processing technology. Provided are an animation playing method, device and apparatus, the method comprising: before playing an animation at a predetermined frame rate, drawing a supplementary image on a moving path between every two frames of adjacent images of the animation; and playing the animation drawn with the supplementary image at the predetermined frame rate. By drawing a supplementary image between frames, the discontinuity and ghost image generated between two frames when an animation is played at a predetermined frame rate are eliminated, thus a user can obtain a more realistic and consecutive visual experience.

BEFORE PLAYING AN ANIMATION AT A PREDETERMINED FRAME RATE, DRAWING A SUPPLEMENTARY IMAGE ON A MOVING PATH BETWEEN EVERY TWO FRAMES OF ADJACENT IMAGES OF THE ANIMATION — 101

PLAYING THE ANIMATION DRAWN WITH THE SUPPLEMENTARY IMAGE AT THE PREDETERMINED FRAME RATE — 102

Fig.1

EP 2 869 272 A1

**Description**

**CROSS REFERENCE TO RELATED APPLICATIONS**

This application claims priority to and the benefit of Chinese Patent Application No. 201210324327.5, filed September 4, 2012 and entitled "method for improving graphical interface rolling effect of touch-screen device" and Chinese Patent Application No. 201210461080.1, filed November 15, 2012 and entitled "method, apparatus and device for displaying an animation," both of which are incorporated herein by reference.

**TECHNICAL FIELD**

The present disclosure relates generally to an image processing technology, in particular to a method, apparatus and device for displaying an animation.

**BACKGROUND**

For most operating systems supporting touch-screen devices, such as Android (Andrews), IOS (Apple's operating system) and Windows Phone, the graphical interface's refresh mode is clear original single-frame rendering. For instance, while its graphical interface is refreshed at a rate of 60 frames/sec, in the refresh process, there will be a more than 15ms interval between each two image frames. When the interface elements, such as the icon or text etc., on the touch screen is scrolling controlled by a user's finger with a relatively fast speed, the movement distance within two frame interval of the icon or text will be relatively long, for example up to 0.5-3cm. Due to persistence of vision, the user will observe several discrete images, possibly together with intermittent afterimages, resulting in the user's feeling about graphical interface scrolling is not smooth nor real.

**SUMMARY**

The embodiments of the application provide a method, apparatus and device for displaying an animation, which may, in part, overcome or reduce one or more of the problems set forth above, for example, animation display interface scrolling is insufficiently smooth caused by intermittent afterimage appearing between two image frames.

In one aspect, the embodiments of the present application provide a method for displaying an animation. The method may include the steps of:

before displaying the animation at a predetermined frame rate, drawing a plurality of supplementary image frames on each moving path between each two adjacent image frames of the animation; and

displaying the animation with the drawn supplementary image frames at the predetermined frame rate.

For example, drawing the supplementary image frames on the moving path between each two adjacent image frames of the animation comprises:

drawing the supplementary image frames on the moving path between each two adjacent image frames of the animation, by way of an original image frame multiple drawing and/or of a natural exposure imitation transformation.

In some embodiments, drawing the supplementary image frames on the moving path between each two adjacent image frames of the animation by way of the original image frame multiple drawing is:

multiply drawing a previous playback image frame on the moving path between the previous playback image frame and a subsequent playback image frame of the animation, with regard to a reference basis of a playback timing of each image frame of the animation.

For example, a step of multiply drawing the previous playback image frame on the moving path between the previous playback and the subsequent playback of the image frames of the animation comprises:

determining a transparency of the previous playback image frame to be drawn, according to a length of the moving path between a previous playback and the subsequent playback of the image frames of the animation and a pixel pitch DPI of the animation display interface; and

multiply drawing the previous playback image frame on the moving path with the determined transparency.

In some other embodiments, drawing the supplementary image frames on the moving path between each two adjacent image frames of the animation by way of the natural exposure imitation transformation is:

performing a matrix transformation process to pixels on the moving path between the previous playback image frame and the subsequent playback image frame of the animation to obtain the supplementary image frames, with regard to a reference to a playback timing of each image frame of the animation.

For example, performing the matrix transformation process to the pixels on the moving path between the previous playback and the subsequent playback of the image frames of the animation comprises:

with regard to the pixels on the moving path between a previous playback and a subsequent playback of the image frames of the animation, performing a transformation to RGB color information and opacity information of the pixels according to a rule and according to a length of the moving path and locations of the pixels.

The rule can be a one-dimensional compression transformation algorithm.
For example, performing the transformation to the RGB color information and the opacity information of the pixels according to the rule and according to the length of the moving path and the locations of the pixels comprises:

according to the length of the moving path and the locations of the pixels, compressing the pixels respectively to a one-dimensional image with a certain transparency at a predetermined compression ratio, and the obtained one-dimensional images constituting the complementary image.

For example, compressing the pixels respectively to the one-dimensional image with the certain transparency at the predetermined compression ratio comprises:

an image constituted by the pixels is as an image matrix M, of which, m and n are a width and a height of the image matrix M; a is the length of the moving path; $P_1$ (i, j) is a pixel located at row i column j in the image matrix M; the pixel $P_1$ (i, j) is compressed to a coordinate $P_1$ (x, j) with the certain transparency according to the predetermined compression ratio, then each pixel within the image matrix M is transformed by the following formulae:
When a> m,

$$P_1(x,j) = \frac{\sum_{i=0}^{x} P(i,j)}{a} \qquad (0<x<m);$$

$$P_1(x,j) = \frac{\sum_{i=0}^{m} P(i,j)}{a} \qquad (m<x<a);$$

$$P_1(x,j) = \frac{\sum_{i=x-a}^{m} P(i,j)}{a} \qquad (a<x<a+m);$$

When a <m,

$$P_1(x,j) = \frac{\sum_{i=0}^{x} P(i,j)}{a} \qquad (0<x<a);$$

$$P_1(x,j) = \frac{\sum_{i=x-a}^{x} P(i,j)}{a} \quad (a<x<m);$$

$$P_1(x,j) = \frac{\sum_{i=x-a}^{m} P(i,j)}{a} \quad (m<x<a+m).$$

In another aspect, the embodiments of the application provide an apparatus for displaying an animation, the apparatus comprises:

a pre-processing module for drawing supplementary image frames on each moving path between each two adjacent image frames of the animation before displaying the animation at a predetermined frame rate;

a display module for displaying the animation with the drawn supplementary image frames at the predetermined frame rate.

For example, the pre-processing module comprises:

a first pre-processing unit, for drawing the supplementary image frames on the moving path between each two adjacent image frames of the animation by way of an original image frame multiple drawing; and/or,

a second pre-processing unit, for drawing the supplementary image frames on the moving path between each two adjacent image frames of the animation by way of a natural exposure imitation transformation.

For example, the first pre-processing unit is used for multiply drawing a previous playback image frame on the moving path between the previous playback and a subsequent playback of the image frames of the animation, with regard to a reference basis of a playback timing of each image frame of the animation.

For example, the first pre-processing unit is used for determining a transparency of the previous playback image frame to be drawn, according to a length of the moving path between the previous playback and a subsequent playback of the image frames of the animation and a pixel pitch DPI of the animation display interface, and multiply drawing the previous playback image frame on the moving path with the determined transparency.

For example, the second pre-processing unit is used for performing a matrix transformation process to pixels on the moving path between the previous playback and a subsequent playback of the image frames of the animation to obtain the supplementary image frames, with regard to a reference basis of a playback timing of each image frame of the animation.

For example, the second pre-processing unit is used for, with regard to the pixels on the moving path between the previous playback and the subsequent playback of the image frames of the animation, performing a transformation to RGB color information and opacity information of the pixels according to a rule and according to a length of the moving path and locations of the pixels.

Wherein the rule is a one-dimensional compression transformation algorithm.

For example, the second preprocessing unit is used for, according to the length of the moving path and the locations of the pixels, compressing the pixels respectively to a one-dimensional image with a certain transparency at a predetermined compression ratio, and the obtained one-dimensional images constituting the complementary images.

For example, the second pre-processing unit is used for making an image constituted by the pixels as an image matrix M, of which, m and n are a width and a height of the image matrix M; a is the length of the moving path; $P_1(i, j)$ is a pixel located at row i column j in the image matrix M; the pixel $P_1(i, j)$ is compressed to a coordinate $P_1(x, j)$ with the certain transparency according to the predetermined compression ratio, then each pixel within the image matrix M is transformed by the following formulae:

When $a > m$,

$$P_1(x,j) = \frac{\sum_{i=0}^{x} P(i,j)}{a} \quad (0<x<m);$$

$$P_1(x,j) = \frac{\sum_{i=0}^{m} P(i,j)}{a} \quad (m<x<a);$$

$$P_1(x,j) = \frac{\sum_{i=x-a}^{m} P(i,j)}{a} \quad (a<x<a+m);$$

When a <m,

$$P_1(x,j) = \frac{\sum_{i=0}^{x} P(i,j)}{a} \quad (0<x<a);$$

$$P_1(x,j) = \frac{\sum_{i=x-a}^{x} P(i,j)}{a} \quad (a<x<m);$$

$$P_1(x,j) = \frac{\sum_{i=x-a}^{m} P(i,j)}{a} \quad (m<x<a+m).$$

In a further aspect, the application provides a device which may include:

a touch screen;

one or more processors;

a memory; and

one or more modules, the one or more modules are stored in the memory and configured to be performed by the one or more processors, wherein the one or more modules has the following functions:

before displaying an animation at a predetermined frame rate, drawing supplementary image frames on each moving path between each two adjacent image frames of the animation;

displaying the animation with the drawn supplementary image frames at the predetermined frame rate.

The beneficial effect of the embodiments of the present application is, before displaying an animation at a predetermined frame rate, drawing supplementary image frames on each moving path between each two adjacent image frames of the animation, and then displaying the animation with the drawn supplementary image frames at the predetermined frame rate. Thereby the problem that intermittent afterimage would appear between two image frames when an animation is displayed at a predetermined frame rate may be overcome or reduced, so that more realistic and coherent visual experience may be obtained.

## BRIEF DESCRIPTION OF THE DRAWINGS

In order to more clearly illustrate some embodiments of the present application, the accompanying drawings need to be used in the description of the embodiments will be simply introduced as below. Apparently, the drawings described below are merely some embodiments of the present disclosure.

Fig.1 is an illustrative flow diagram of a method for displaying an animation according to an embodiment of the application.

Fig.2 is an illustrative diagram of a compression transformation process to two image frames previous and subsequent according to an embodiment of the present application, wherein the compression transformation process is performed when an image matrix is separated and a movement distance a> image matrix length m.

Fig.3 is an illustrative diagram of a compression transformation process to two image frames previous and subsequent according to an embodiment of the present application, wherein the compression transformation process is performed when an image matrix is not separated completely and a movement distance a> image matrix length m.

Fig.4a is an illustrative diagram of an animation display process on an animation display interface when not adopting a technical solution according to an embodiment of the present application.

Fig.4b is an illustrative diagram of an animation display process on an animation display interface when adopting a technical solution according to an embodiment of the present application.

Fig.5 is an illustrative structure diagram of an apparatus for displaying an animation according to an embodiment of the present application.

## DETAILED DESCRIPTION

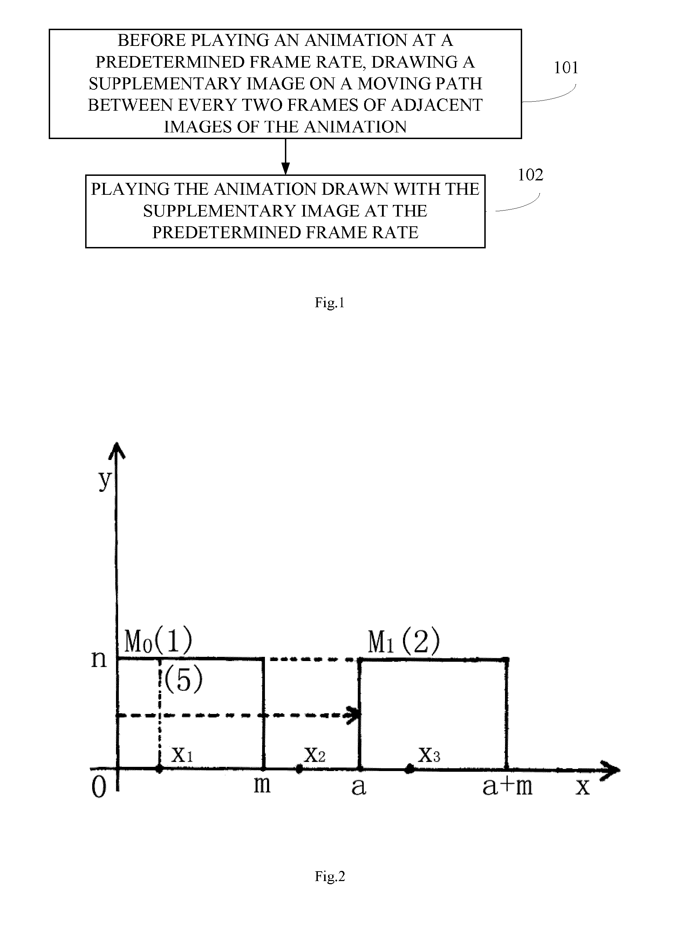

For purposes, technical solutions and advantages of this disclosure are clear, the embodiments of the present disclosure will be described in detail with reference to the drawings.
Referring to Fig.1, a method for displaying an animation according to an embodiment of the application may include the steps of:

Step 101: before displaying the animation at a predetermined frame rate, drawing supplementary image frames on each moving path between each two adjacent image frames of the animation.

Step 102: displaying the animation with the drawn supplementary image frames at the predetermined frame rate.

When the embodiment of the present application is particularly implemented, before displaying an animation at a predetermined frame rate, supplementary image frames are drawn on a moving path between each two adjacent image frames of the animation, and then the animation with the drawn supplementary image frames is displayed at the predetermined frame rate. Thereby the problem that intermittent afterimage would appear between two image frames when an animation is displayed at a predetermined frame rate may be overcome or reduced, so that more realistic and coherent visual experience may be achieved.
For example, implementation of drawing the supplementary image frames on each moving path between each two adjacent image frames of the animation may comprise:

Drawing the supplementary image frames on the moving path between each two adjacent image frames of the animation, by way of an original image frame multiple drawing and/or of a natural exposure imitation transformation, so that the drawn supplementary image frames may fill the intermittent afterimage generated on the moving path between the two image frames, and fluency visual experience may be achieved.

Embodiment of the present application is not limited to drawing supplementary image frames on the moving path between each two adjacent image frames of the animation by the above way of an original image frame multiple drawing and/or of a natural exposure imitation transformation. When actually being implemented, the supplementary image frames on the moving path between each two adjacent image frames may be drawn according to different animation display performance and quality requirements to overcome or reduce the problem that afterimage will appear between the adjacent two image frames when the animation is displayed fast.

In the embodiments of the present application, drawing supplementary image frames on the moving path between each two adjacent image frames of the animation by way of an original image frame multiple drawing may be:

Multiply drawing a previous playback image frame on the moving path between the previous playback image frame and a subsequent playback image frame of the animation, with regard to a reference basis of a playback timing of each image frame of the animation.

For example, multiply drawing a previous playback image frame on a moving path between the previous playback image frame and a subsequent playback image frame of the animation may comprise:

Determining a transparency of the previous playback image frame to be drawn, according to a length of the moving path between the previous playback image frame and the subsequent playback image frame of the animation and a pixel pitch DPI of the animation display interface.

Multiply drawing the previous playback image frame on the moving path with the determined transparency.

The present embodiment multiply draws supplementary image frames with a certain transparency on the moving path between two adjacent image frames to fill the afterimage generated between two adjacent image frames when displaying the animation at a predetermined frame rate. The implementation is easy and has good effect. A relatively smooth and coherent visual experience may be achieved at a rate of 24 frame/s or more.

In the embodiments of the present application, drawing supplementary image frames on the moving path between each two adjacent image frames of the animation by way of a natural exposure imitation transformation is:

Performing matrix transformation process to pixels on the moving path between a previous playback image frame and a subsequent playback image frame of the animation to obtain the supplementary image frames, with regard to a reference basis of a playback timing of each image frame of the animation.

For example, performing matrix transformation process to pixels on a moving path between a previous playback image frame and a subsequent playback image frame of the animation comprises:

With regard to the pixels on the moving path between the previous playback image frame and the subsequent playback image frame of the animation, performing a transformation to RGB color information and opacity information of the pixels according to a rule and according to a length of the moving path and locations of the pixels.

In the embodiments of the present application, the rule may be a one-dimensional compression transformation algorithm which the embodiments of the present application do not particularly limit.

In the embodiments of the present application, when the rule is the one-dimensional compression transformation algorithm, performing a transformation to RGB color information and opacity information of pixels according to the rule and according to the length of the moving path and locations of the pixels may comprise:

According to the length of the moving path and locations of the pixels, compressing the pixels respectively to a one-dimensional image with a certain transparency at a predetermined compression ratio, and the obtained one-dimensional images constituting the complementary image.

For example, compressing the pixels respectively to a one-dimensional image with a certain transparency at a predetermined compression ratio comprises:

An image constituted by the pixels is called as an image matrix M, of which, m and n are a width and a height of the image matrix M; a is the length of the moving path; $P_1(i, j)$ is a pixel located at row i and column j in the image matrix M; and the pixel $P_1(i, j)$ is compressed to a coordinates $P_1(x, j)$ with a certain transparency according to a predetermined compression ratio, then each pixel within the image matrix M is transformed by the following formulae: When a> m,

$$P_1(x,j) = \frac{\sum_{i=0}^{x} P(i,j)}{a} \quad (0 < x < m);$$

$$P_1(x,j) = \frac{\sum_{i=0}^{m} P(i,j)}{a} \quad (\text{m}<\text{x}<\text{a});$$

$$P_1(x,j) = \frac{\sum_{i=x-a}^{m} P(i,j)}{a} \quad (\text{a}<\text{x}<\text{a}+\text{m});$$

When a <m,

$$P_1(x,j) = \frac{\sum_{i=0}^{x} P(i,j)}{a} \quad (0<\text{x}<\text{a});$$

$$P_1(x,j) = \frac{\sum_{i=x-a}^{x} P(i,j)}{a} \quad (\text{a}<\text{x}<\text{m});$$

$$P_1(x,j) = \frac{\sum_{i=x-a}^{m} P(i,j)}{a} \quad (\text{m}<\text{x}<\text{a}+\text{m}).$$

The present embodiment draws supplementary image frames between two adjacent image frames by the above way of a natural exposure imitation, thus the disposed image frame has the same effect as the original image frame's natural exposure image generated within the time of 1 frame, so that the effect of the drawn image is well, and visual experience is greatly enhanced.

Now the implementation of the above technical solutions will be described in detail by combining with specific application scenario, specifically described as follows:

With regard to an application scenario that a user slides a touch screen device that results a sliding on an image display interface: when a user interface sliding is detected, the touch screen device does not render a clear original image frame, but draws supplementary image frames on a path between two adjacent image frames, and renders and outputs images drawn with the supplementary image frames. Wherein features of the supplementary image frames are their transparencies related to a sliding speed or a sliding distance (here, the sliding distance is the product of sliding speed multiplied by the refresh time determined according to the refresh rate of the current graphical user interface). Methods for generating supplementary image frames are different according to different requirements about performance and quality, including two ways of a multiple drawing from the original image frame and of a natural exposure imitation transformation.

In this embodiment, the technical solution of a natural exposure imitation is performing RGB (red, green and blue) color information and opacity information transformation to the icon or text pixels on the moving path between two image frames according to rules. Thus the disposed image frame has the same effect as the original image frame's natural exposure image generated within the time of 1 frame. One of the implementations is performing transforming to the pixels on the moving path by way of a one-dimensional compression transformation. Although this method requires high operation performance on a device, the quality of the image drawn by this way is well, and the visual experience may be greatly enhanced.

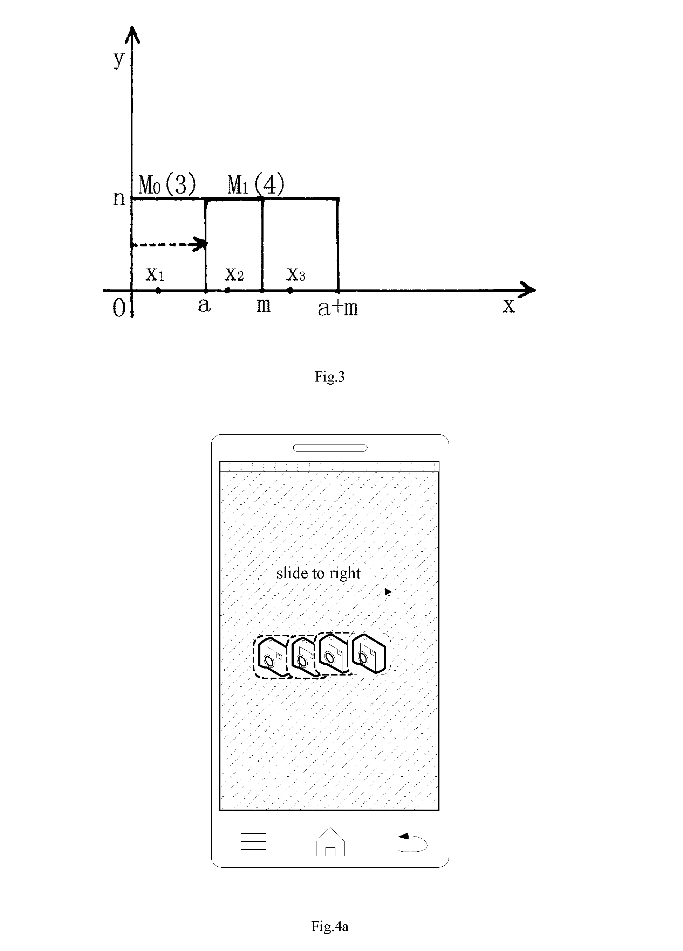

Fig.2 and Fig.3 can be referred to specifically. Fig.2 is an illustrative diagram of a compression transformation process to two image frames previous and subsequent according to the embodiment of the present application, wherein the compression transformation process is performed when an image matrix is separated and a movement distance a> image matrix length m. Fig.3 is an illustrative diagram of a compression transformation process to two image frames previous and subsequent according to the embodiment of the present application, wherein the compression transformation process is performed when an image matrix is not separated completely and a movement distance a> image matrix length m. Then, in the scenario shown in FIG.2 and Fig.3, an image matrix M is an interface display element of a rectangle icon or text with a resolution of m * n, P (i, j) is a point at row i and column j, $P_1$ (x, j) is a converted point whose abscissa is x and ordinate is j; a previous image frame M0 (1) or (3) is scrolled to a current frame $M_1$ (2) or (4) by a scrolling distance a. Then, parts or all of the icons and text, which have passed on the scrolling path, may be compressed proportional to a one-dimensional image with a transparency information as shown by a broken line 2 (5), in the direction of a normal vector on a scrolling direction of M by way of a one-dimensional compression transformation algorithm. When the compression transformation is specifically implemented, according to the pixels in different positions of M, respectively, the above formulae are used to perform the compression transformation. For example x1, x2 and x3 in Fig.2 and Fig.3 respectively correspond to the three formulae when a> m and a <m.

With regard to j from 0 to n, transformations on total four variables, i.e., RGB color and opacity, are performed in sequence according to the formulae. In the scene shown in Fig.2 of two completely separated previous and subsequent frames, the formula for a>m is used. In the scene shown in Fig.3 of not completely separated, the formula for a<m is used. A one-dimensional image at X is obtained by transformation. Then a series of one-dimensional images, which are obtained by the same operation from coordinate 0 to coordinate a+m, constitute a transformed image matrix. By the above method, each icon or text need to be scrolled in the frame is transformed, and then the transformed entire frame is obtained.

The technical solution of an original image frame multiple drawing is multiply drawing the original image frame on the path between two image frames, and each image frame has a speed-related transparency. The transparencies of supplementary image frames are inversely proportional to the scrolling speed of UI (user interface), and at the same time are also influenced by a screen pixel pitch DPI and frame sequential. The processing result is close to a natural exposure image in the time of one frame, and the performance is well.

As shown in Fig.2 and Fig.3, when the user interface slides, coordinates scrolled by a previous image frame M0 (1) or (2) are recorded, the original image frame is multiply drawn on the path from the coordinate of the previous image frame to a coordinate of a current image frame M1 (2) or (4). The drawing is re-performed every k points according to different pixel pitchs (DPI) on-screen and sliding distances, and each image frame has a speed-related transparency. Relationship between the transparency of supplementary image and the slide distance of this current frame is obtained by adjusting an inverse proportion curve of k/a. Shape of the curve is adjusted according to actual tests, so that the final image after the process is close to the image formed from the original image frame by the natural exposure in the time of one frame.

By the implementation of the above technical solutions, when a user slides the touch screen, by way of an original image frame multiple drawing and/or of a natural exposure imitation transformation, drawing supplementary image frames on the moving path between each two adjacent image frames of the animation. Such that the drawn supplementary image frames may fill the intermittent afterimage generated on the moving path between the two image frames, and smooth sliding coherent experience may be obtained.

Referring to Fig.4a, it is an illustrative diagram of an animation display process on an animation display interface when not adopting a technical solution according to an embodiment of the present application. Wherein, it takes an icon of a camera on the display interface as an example to present the animation of a sliding process. When the user slides the touch screen, if the touch screen renders a clear original single-frame at a refresh rate of 60 frames/s, in this condition, when the graphical interface scrolls, there will be a more than 15ms interval between each two adjacent image frames. If this sliding speed is about 0.3m/s, the interval between the two adjacent image frames is about 0.5cm. Due to persistence of vision, user will observe an image as shown in Fig.4a, wherein intermittent afterimage appears between two image frames.

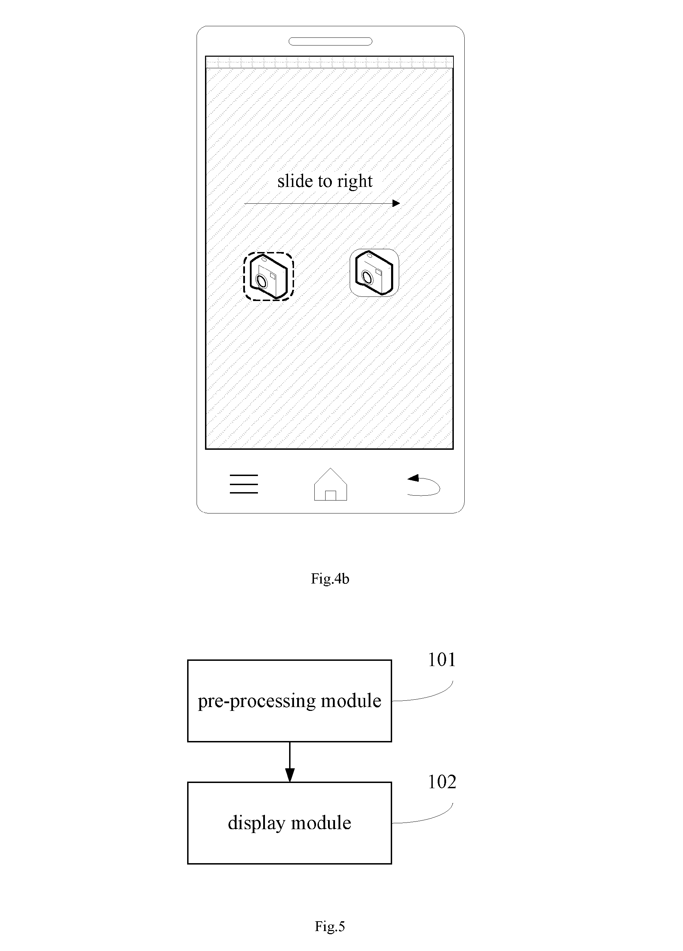

Fig.4b is an illustrative diagram of an animation display process on an animation display interface when adopting a technical solution according to an embodiment of the present application. Wherein, it takes an icon of a camera on the display interface as an example to present the animation of a sliding process. When the user slides the touch screen, if the touch screen renders a clear original single-frame at a refresh rate of 60 frames/s, in this condition, when the graphical interface scrolls, there will be a more than 15ms interval between each two adjacent image frames. If this sliding speed is about 0.3m/s, the interval between the two adjacent image frames is about 0.5cm. By adopting the present technical solution described in the embodiments, a previous image frame is re-drawn on the 0.5cm moving path to fill the intermittent afterimage generated on the moving path of two image frames, so that user will observe an image as shown in Fig.4b, and intermittent afterimage would no longer appear between two image frames when sliding the touch screen. Smooth transition may be achieved, so that consistent smooth sliding experience may be obtained.

Further, the present application also provides an apparatus for displaying an animation. Referring to Fig.5, the apparatus comprises:

a pre-processing module 201, which may be used for drawing supplementary image frames on each moving path between each two adjacent image frames of the animation before displaying the animation at a predetermined frame rate;

a display module 202, which may be used for displaying the animation with the drawn supplementary image frames at the predetermined frame rate.

For example, the pre-processing module 201 comprises:

a first pre-processing unit, which may be used for drawing the supplementary image frames on the moving path between each two adjacent image frames of the animation by way of an original image frame multiple drawing; and/or,

a second pre-processing unit, which may be used for drawing the supplementary image frames on the moving path between each two adjacent image frames of the animation by way of a natural exposure imitation transformation.

In the embodiments of the application, for example, the first pre-processing unit may be used for multiply drawing a previous playback image frame on the moving path between the previous playback and a subsequent playback of the image frames of the animation, with regard to a reference basis of a playback timing of each image frame of the animation.

Further for example, the first pre-processing unit may be used for determining a transparency of the previous playback image frame to be drawn, according to a length of the moving path between the previous playback and the subsequent playback of the image frames of the animation and a pixel pitch DPI of the animation display interface, and multiply drawing the previous playback image frame on the moving path with the determined transparency.

In the embodiments of the application, for example, the second pre-processing unit may be used for performing a matrix transformation process to the pixels on the moving path between a previous playback and a subsequent playback of the image frames of the animation to obtain the supplementary image frames, with regard to a reference basis of a playback timing of each image frame of the animation.

Further for example, the second pre-processing unit may be used for, with regard to pixels on a moving path between a previous playback and a subsequent playback of the image frames of the animation, performing a transformation to RGB color information and opacity information of the pixels according to a rule and according to a length of the moving path and locations of the pixels.

In the embodiments of the application, the rule may be a one-dimensional compression transformation algorithm.

When the rule is the one-dimensional compression transformation algorithm, the second preprocessing unit in the implementation of the application may be used for, according to the length of the moving path and locations of the pixels, compressing the pixels respectively to a one-dimensional image with a certain transparency at a predetermined compression ratio, and the obtained one-dimensional images constitutes the complementary image.

For example, the second pre-processing unit may be used for making an image constituted by pixels as an image matrix M, of which, m and n are a width and a height of the image matrix M; a is the length of the moving path; $P_1(i, j)$ is a pixel located at row i column j in the image matrix M; and the pixel $P_1(i, j)$ is compressed to a coordinate $P_1(x, j)$ with a certain transparency according to a predetermined compression ratio, then each pixel within the image matrix M is transformed by the following formulae:

When a>m,

$$P_1(x, j) = \frac{\sum_{i=0}^{x} P(i, j)}{a} \quad (0<x<m);$$

$$P_1(x, j) = \frac{\sum_{i=0}^{m} P(i, j)}{a} \quad (m<x<a);$$

$$P_1(x, j) = \frac{\sum_{i=x-a}^{m} P(i, j)}{a} \quad (a<x<a+m);$$

When a <m,

$$P_1(x,j) = \frac{\sum_{i=0}^{x} P(i,j)}{a} \quad (0<x<a);$$

$$P_1(x,j) = \frac{\sum_{i=x-a}^{x} P(i,j)}{a} \quad (a<x<m);$$

$$P_1(x,j) = \frac{\sum_{i=x-a}^{m} P(i,j)}{a} \quad (m<x<a+m).$$

The embodiments of the present application, before displaying an animation at a predetermined frame rate, draw supplementary image frames on each moving path between each two adjacent image frames of the animation, and then display the animation with the drawn supplementary image frames at the predetermined frame rate. Thereby the problem that intermittent afterimage would appear between two image frames when an animation is displayed at a predetermined frame rate may be overcome or reduced, so that more realistic and coherent visual experience may be obtained.

Furthermore, the embodiment of the application also provides a device, and the device comprises:

a touch screen;

one or more processors;

a memory; and

one or more modules, the one or more modules are stored in the memory and configured to be performed by the one or more processors, wherein the one or more modules has the following functions:

before displaying an animation at a predetermined frame rate, drawing the supplementary image frames on each moving path between each two adjacent image frames of the animation;

displaying the animation with the drawn supplementary image frames at the predetermined frame rate.

Wherein the realization of drawing the supplementary image frames on each moving path between each two adjacent image frames of the animation may be available by referring to the correlation method and the associated apparatus described above, here it will not be described again.

The device provided according to the embodiments of the present application, before displaying an animation at a predetermined frame rate, draws supplementary image frames on each moving path between each two adjacent image frames of the animation, and then displays the animation with the drawn supplementary image frames at the predetermined frame rate. Thereby the problem that intermittent afterimage would appear between two image frames when an animation is displayed at a predetermined frame rate may be overcome or reduced, so that more realistic and coherent visual experience may be obtained.

Through the above description of the embodiments, the skilled persons in the art may clearly understand that the embodiments of present application may be implemented by hardware or by software and necessary general hardware platform. According to this understanding, embodiments of the present application may be technical solutions embodied in a form of software products, and the software products may be stored in a nonvolatile storage medium (it may be a CD-ROM, U disk and mobile hard disk, etc.) which includes a plurality of instructions for making a computer device (it may be a personal computer, a server or a network equipment) to perform the method described in various embodiments of the disclosure.

Persons skilled in the art may understand that the accompanying drawings are just schematic views of preferred embodiments, the modules or processes in the accompanying drawings are not necessarily in implementing this disclosure.

Persons skilled in the art may understand that the modules of the apparatus in the embodiments may be distributed in the apparatus in the embodiments as described in the embodiments, and may also be distributed in one or more apparatuses different from that in the embodiments as corresponding changes. The above modules in the embodiments may be combined into one module, and also may be further split into multiple sub-modules.

The numbers of the above embodiment of the present application are just for describing, not represent the pros and cons of the embodiments.

Obviously, the persons skilled in the art may make various modifications and variations to the disclosure without departing from the spirit and scope of this disclosure. Thus, if the modifications and variations to the disclosure are in the scope of the claims of present disclosure or their equivalents, the present disclosure is intended to cover such modifications and variations.

**Claims**

1. A method for displaying an animation, the method comprising:

   before displaying the animation at a predetermined frame rate, drawing supplementary image frames on each moving path between each two adjacent image frames of the animation;
   displaying the animation with the drawn supplementary image frames at the predetermined frame rate.

2. The method according to claim 1, wherein drawing the supplementary image frames on the moving path between each two adjacent image frames of the animation comprises:

   drawing the supplementary image frames on the moving path between each two adjacent image frames of the animation, by way of an original image frame multiple drawing and/or of a natural exposure imitation transformation.

3. The method according to claim 2, wherein drawing the supplementary image frames on the moving path between each two adjacent image frames of the animation by way of the original image frame multiple drawing is:

   multiply drawing a previous playback image frame on the moving path between the previous playback image frame and a subsequent playback image frame of the animation, with regard to a reference basis of a playback timing of each image frame of the animation.

4. The method according to claim 3, wherein multiply drawing the previous playback image frame on the moving path between the previous playback image frame and the subsequent playback image frame of the animation comprises:

   determining a transparency of the previous playback image frame to be drawn, according to a length of the moving path between the previous playback image frame and the subsequent playback image frame of the animation and a pixel pitch DPI of the animation display interface;
   multiply drawing the previous playback image frame on the moving path with the determined transparency.

5. The method according to claim 2, wherein drawing the supplementary image frames on the moving path between each two adjacent image frames of the animation by way of the natural exposure imitation transformation is:

   performing a matrix transformation process to pixels on the moving path between the previous playback image frame and the subsequent playback image frame of the animation to obtain the supplementary image frames, with regard to a reference to a playback timing of each image frame of the animation.

6. The method according to claim 5, wherein performing the matrix transformation process to the pixels on the moving path between the previous playback image frame and the subsequent playback image frame of the animation comprises:

   with regard to the pixels on the moving path between the previous playback image frame and the subsequent playback image frame of the animation, performing a transformation to RGB color information and opacity information of the pixels according to a rule and according to a length of the moving path and locations of the pixels.

7. The method according to claim 6, wherein the rule is a one-dimensional compression transformation algorithm.

8. The method according to claim 7, wherein performing the transformation to the RGB color information and the opacity information of the pixels according to the rule and according to the length of the moving path and the locations of the pixels comprises:

> according to the length of the moving path and the locations of the pixels, compressing the pixels respectively to a one-dimensional image with a transparency at a predetermined compression ratio, and the obtained one-dimensional images constituting the complementary image.

9. The method according to claim 8, wherein compressing the pixels respectively to the one-dimensional image with the transparency at the predetermined compression ratio comprises:

> an image constituted by the pixels is as an image matrix M, of which, m and n are a width and a height of the image matrix M; a is the length of the moving path; $P_1(i, j)$ is a pixel located at row i column j in the image matrix M; the pixel $P_1(i, j)$ is compressed to a coordinate $P_1(x, j)$ with the transparency according to the predetermined compression ratio, then each pixel within the image matrix M is transformed by the following formulae:
> When a> m,

$$P_1(x, j) = \frac{\sum_{i=0}^{x} P(i, j)}{a} \quad (0<x<m);$$

$$P_1(x, j) = \frac{\sum_{i=0}^{m} P(i, j)}{a} \quad (m<x<a);$$

$$P_1(x, j) = \frac{\sum_{i=x-a}^{m} P(i, j)}{a} \quad (a<x<a+m);$$

When a <m,

$$P_1(x, j) = \frac{\sum_{i=0}^{x} P(i, j)}{a} \quad (0<x<a);$$

$$P_1(x, j) = \frac{\sum_{i=x-a}^{x} P(i, j)}{a} \quad (a<x<m);$$

$$P_1(x, j) = \frac{\sum\limits_{i=x-a}^{m} P(i, j)}{a} \quad (\text{m}<\text{x}<\text{a}+\text{m}).$$

10. An apparatus for displaying an animation, the apparatus comprising:

   a pre-processing module for drawing supplementary image frames on each moving path between each two adjacent image frames of the animation before displaying the animation at a predetermined frame rate; a display module for displaying the animation with the drawn supplementary image frames at the predetermined frame rate.

11. The apparatus according to claim 10, wherein the pre-processing module comprises:

   a first pre-processing unit, for drawing the supplementary image frames on the moving path between each two adjacent image frames of the animation by way of an original image frame multiple drawing; and/or, a second pre-processing unit, for drawing the supplementary image frames on the moving path between each two adjacent image frames of the animation by way of a natural exposure imitation transformation.

12. The apparatus according to claim 11, wherein the first pre-processing unit is used for multiply drawing a previous playback image frame on the moving path between the previous playback image frame and a subsequent playback image frame of the animation, with regard to a reference basis of a playback timing of each image frame of the animation.

13. The apparatus according to claim 12, wherein the first pre-processing unit is used for determining a transparency of the previous playback image frame to be drawn, according to a length of the moving path between the previous playback image frame and the subsequent playback image frame of the animation, and a pixel pitch DPI of the animation display interface, and multiply drawing the previous playback image frame on the moving path with the determined transparency.

14. The apparatus according to claim 11, wherein the second pre-processing unit is used for performing a matrix transformation process to pixels on the moving path between the previous playback image frame and a subsequent playback image frame of the animation to obtain the supplementary image frames, with regard to a reference basis of a playback timing of each image frame of the animation.

15. The apparatus according to claim 14, the second pre-processing unit is used for, with regard to the pixels on the moving path between the previous playback image frame and the subsequent playback image frame of the animation, performing a transformation to RGB color information and opacity information of the pixels according to a rule and according to a length of the moving path and locations of the pixels.

16. The apparatus according to claim 15, wherein the rule is a one-dimensional compression transformation algorithm.

17. The apparatus according to claim 16, wherein the second preprocessing unit is used for, according to the length of the moving path and the locations of the pixels, compressing the pixels respectively to a one-dimensional image with a transparency at a predetermined compression ratio, and the obtained one-dimensional images constituting the complementary image.

18. The apparatus according to claim 17, wherein the second pre-processing unit is used for making an image constituted by the pixels as an image matrix M, of which, m and n are a width and a height of the image matrix M; a is the length of the moving path; $P_1$ (i, j) is a pixel located at row i column j in the image matrix M; the pixel $P_1$ (i, j) is compressed to a coordinate $P_1$ (x, j) with the transparency according to the predetermined compression ratio, then each pixel within the image matrix M is transformed by the following formulae:
When a> m,

$$P_1(x,j) = \frac{\sum_{i=0}^{x} P(i,j)}{a} \quad (0 < x < m);$$

$$P_1(x,j) = \frac{\sum_{i=0}^{m} P(i,j)}{a} \quad (m < x < a);$$

$$P_1(x,j) = \frac{\sum_{i=x-a}^{m} P(i,j)}{a} \quad (a < x < a+m);$$

When a < m,

$$P_1(x,j) = \frac{\sum_{i=0}^{x} P(i,j)}{a} \quad (0 < x < a);$$

$$P_1(x,j) = \frac{\sum_{i=x-a}^{x} P(i,j)}{a} \quad (a < x < m);$$

$$P_1(x,j) = \frac{\sum_{i=x-a}^{m} P(i,j)}{a} \quad (m < x < a+m).$$

**19.** A device, the device comprising:

a touch screen;
one or more processors;
a memory; and
one or more modules, the one or more modules are stored in the memory and configured to be performed by the one or more processors, wherein the one or more modules has the following functions:

before displaying an animation at a predetermined frame rate, drawing supplementary image frames on each moving path between each two adjacent image frames of the animation;
displaying the animation with the drawn supplementary image frames at the predetermined frame rate.

BEFORE PLAYING AN ANIMATION AT A PREDETERMINED FRAME RATE, DRAWING A SUPPLEMENTARY IMAGE ON A MOVING PATH BETWEEN EVERY TWO FRAMES OF ADJACENT IMAGES OF THE ANIMATION

101

PLAYING THE ANIMATION DRAWN WITH THE SUPPLEMENTARY IMAGE AT THE PREDETERMINED FRAME RATE

102

Fig.1

Fig.2

Fig.3

Fig.4a

slide to right

Fig.4b

pre-processing module — 101

display module — 102

Fig.5

# INTERNATIONAL SEARCH REPORT

| International application No. |
| --- |
| PCT/CN2013/079301 |

**A. CLASSIFICATION OF SUBJECT MATTER**

See the extra sheet

According to International Patent Classification (IPC) or to both national classification and IPC

**B. FIELDS SEARCHED**

Minimum documentation searched (classification system followed by classification symbols)

IPC: G06 F; G06 T

Documentation searched other than minimum documentation to the extent that such documents are included in the fields searched

Electronic data base consulted during the international search (name of data base and, where practicable, search terms used)

WPI, EPODOC, CNPAT, CNKI: animat+, supplement, touch+, slid+, distance, speed

**C. DOCUMENTS CONSIDERED TO BE RELEVANT**

| Category* | Citation of document, with indication, where appropriate, of the relevant passages | Relevant to claim No. |
| --- | --- | --- |
| X | CN 102637107 A (HONG FU JIN PRECISION INDUSTRY (SHENZHEN) ,LTD etal (,LTD.et al.) 15 August 2012 (15.08.2012) description, paragraphs [0038] to [0041] | 1, 10, 19 |
| PX | CN 103021007 A (BEIJING XIAOMI TECHNOLOGY CO., LTD.) 03 April 2013 (03.04.2013) claims 1 to 19 | 1-19 |
| A | CN 102385473 A (TENCENT TECHNOLOGY (SHENZHEN) CO., LTD.) 21 March 2012 (21.03.2012) the whole document | 1-19 |
| A | CN 101727282 A (GUANGDONG OPPO ELECTRONICS INDUSTRY CO., LTD.) 09 June 2010 (09.06.2010) the whole document | 1-19 |
| A | US 2010/0231534 A1 (CHAUDHRI, Imran et al.) 16 September 2010 (16.09.2010) the whole document | 1-19 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 22 September 2013 (22.09.2013) | 10 October 2013 (10.10.2013) |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>CHEN, Ronghua<br><br>Telephone No. (86-10) 61648252 |

Form PCT/ISA/210 (second sheet) (July 2009)

## INTERNATIONAL SEARCH REPORT
### Information on patent family members

| | International application No. |
|---|---|
| | PCT/CN2013/079301 |

| Patent Documents referred in the Report | Publication Date | Patent Family | Publication Date |
|---|---|---|---|
| CN 102637107 A | 15.08.2012 | None | |
| CN 103021007 A | 03.04.2013 | None | |
| CN 102385473 A | 21.03.2012 | WO 2012028039 A1 | 08.03.2012 |
| | | US 2013076758 A1 | 28.03.2013 |
| | | HK 1168671 A0 | 04.01.2013 |
| CN 101727282 A | 09.06.2010 | CN 101727282 B | 18.07.2012 |
| US 2010/0231534 A1 | 16.09.2010 | WO 2010107661 A1 | 23.09.2010 |
| | | KR 20110127755 A | 25.11.2011 |
| | | EP 2409214 A1 | 25.01.2012 |
| | | JP 2012521049 A | 10.09.2012 |
| | | HK 1166659 A0 | 02.11.2012 |
| | | US 2010231537 A1 | 16.09.2010 |
| | | US 2010231536 A1 | 16.09.2010 |
| | | US 2010231535 A1 | 16.09.2010 |

Form PCT/ISA /210 (patent family annex) (July 2009)

# INTERNATIONAL SEARCH REPORT

International application No.

PCT/CN2013/079301

A. CLASSIFICATION OF SUBJECT MATTER

G06T 13/00 (2006.01) i

G06F 3/048 (2013.01) i

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201210324327

- CN 201210461080